Europäisches Patentamt

**European Patent Office**

Office européen des brevets

(11) Veröffentlichungsnummer: **0 072 971**
**B1**

(12) **EUROPÄISCHE PATENTSCHRIFT**

(45) Veröffentlichungstag der Patentschrift:
13.02.85

(51) Int. Cl.⁴: **C 01 B 33/28**, B 01 J 2/28

(21) Anmeldenummer: 82107276.6

(22) Anmeldetag: 11.08.82

(54) Verfahren zur Herstellung von Zeolith-Agglomeraten.

(30) Priorität: 22.08.81 DE 3133317

(43) Veröffentlichungstag der Anmeldung:
02.03.83 Patentblatt 83/9

(45) Bekanntmachung des Hinweises auf die Patenterteilung:
13.02.85 Patentblatt 85/7

(84) Benannte Vertragsstaaten:
AT BE CH DE FR GB IT LI LU NL SE

(56) Entgegenhaltungen:
DE - A - 2 423 895
DE - A - 2 736 903
US - A - 3 912 713
US - A - 4 260 528

(73) Patentinhaber: Kali-Chemie Aktiengesellschaft,
Postfach 220 Hans-Böckler-Allee 20,
D-3000 Hannover 1 (DE)

(72) Erfinder: Derleth, Helmut Dipl.-Chem., Dr.rer.nat.,
Grosse Drakenburger Strasse 58, D-3070 Nienburg (DE)
Erfinder: Sauer, Günther, Prinzenstrasse 51,
D-3070 Nienburg (DE)

(74) Vertreter: Lauer, Dieter, Dr., c/o Kali-Chemie
Aktiengesellschaft Postfach 220,
D-3000 Hannover 1 (DE)

## Beschreibung

Die Erfindung betrifft die Herstellung von Zeolith-Agglomeraten sowie nach dem Verfahren hergestellte Agglomerate.

Zeolithe, insbesondere bestimmte synthetische, amorphe und/oder kristalline Zeolithe, die gutes Bindevermögen für Calcium- oder Magnesium-Ionen aufweisen, werden neuerdings zur Reduzierung des Phosphatgehaltes in Waschmitteln eingesetzt.

Beim Einsatz von Zeolithpulvern hat es sich als nachteilig gezeigt, daß sie in Wasser relativ lange unbenetzt bleiben, so daß ihre Wirksamkeit verzögert eintritt und dadurch das Waschergebnis verschlechtert wird. Außerdem sind die Pulver als solche nicht homogen mit granulierten Wasch-, Spül- oder Reinigungsmittelbestandteilen vermischbar.

Es hat daher nicht an Versuchen gefehlt, diese Nachteile durch Einsatz granulierter Zeolithe zu beheben, z. B. durch Granulation mit Pentanatriumpolyphosphat (DE-A-2 510 741) oder mit polymerem Phosphat (DE-A-2 921 945) oder mit 15 bis 20 Gew.-% Natriumsulfat (DE-A-2 738 085).

Die Verwendung phosphathaltiger Bindemittel ist aber ungeeignet, da ihr Einsatz das beabsichtigte Ziel der Phosphatsubstitution nicht voll erreichen läßt. Außerdem führt die Verwendung von Pentanatriumtripolyphosphat zu Granulaten unzureichender mechanischer Stabilität, und bei Verwendung polymerer Phosphate werden stabile Granulate nur bei Einsatz von über 33 Gew.-% Bindemittel erreicht. Auch bei anderen Verfahren müssen entweder erhebliche Mengen an Bindemittel verwendet werden, was naturgemäß den Anteil an eigentlich einzusetzender Aktivsubstanz, dem Zeolith, absenkt oder die erhaltenen Granulate sind unbefriedigend hinsichtlich der Abriebfestigkeit und führen daher zu Staubbildung bei der Handhabung.

Eine weitere wichtige Forderung beim Einsatz von Zeolithen als Phosphatersatzstoff ist, daß der ionenaustauschende Zeolith, gleich in welcher Form er vorliegt, beim Dispergieren im Wasser wieder die ursprüngliche optimale Kornverteilung annimmt, daß er also keiner irreversiblen Agglomeration unterworfen sind. Andernfalls kommt die härtebindende Wirkung der Zeolithe nicht voll zum Einsatz, und es kommt zu einer unerwünschten Ablagerung der gröberen Zeolith-Agglomerate auf Textilien und in Teilen der Waschmaschine.

Es gibt bisher kein Verfahren, das Zeolith-Agglomerate liefert, die sowohl phosphatfrei und abriebfest sind als auch in wäßrigem Medium schnell wieder in die ursprüngliche Kornverteilung zerfallen.

Aufgabe der Erfindung ist es daher, ein Verfahren zur Verfügung zu stellen, daß es gestattet Zeolith-Agglomerate zur Verfügung zu stellen, die diese vorteilhaften Eigenschaften aufweisen.

Die Lösung der Aufgabe erfolgt durch das in den Ansprüchen wiedergegebene Verfahren.

Es ist zwar aus der DE-A-2 736 903 ein Verfahren bekannt, bei dem Zeolith-Agglomerate unter Verwendung eines Bindemittels aus der Gruppe wasserlöslicher Stärke, Salze, Gumme, Zucker, Polymere und/oder Tenside hergestellt werden. Als bevorzugtes Bindemittel finden Stärkebindemittel Verwendung, wobei gemäß den konkret angeführten Beispielen mindestens 25% des Gemisches aus Zeolith und Bindemittel auf das Bindemittel entfallen. Derartige Agglomerate sollen in Wasser leicht zerfallen und zu einer letztlichen Größe von 2 bis 8,3 μ.

Zum einen sind die verwendeten Bindemittelkonzentrationen hoch, wodurch der Gehalt der Agglomerate an aktivem, wasserenthärtendem Zeolith unnötig begrenzt wird.

Zum anderen handelt es sich bei der angegebenen Teilchengröße offensichtlich um die Angabe des mittleren Teilchendurchmessers. Wie die angeführten Vergleichsbeispiele zeigen, ist aber selbst bei Verwendung der bevorzugt genannten Stärke als Bindemittel bei geringen Bindemittel-Konzentrationen in der aus den Agglomeraten hergestellten wäßrigen Dispersion ein Anteil von mehr als 10% an irreversibel agglomerierten Teilchen vorhanden, die einen Teilchendurchmesser über 10 μ aufweisen. Außerdem weisen solche Agglomerate eine ungenügende Abriebfestigkeit auf.

Nach dem erfindungsgemäßen Verfahren hergestellte Agglomerate zeigen dagegen gute Abriebfestigkeit, und ihre wäßrigen Dispersionen weisen weniger als 10% Teilchen, vorzugsweise sogar weniger als 5% Teilchen, mit einer Teilchengröße über 10 μ auf.

Das erfindungsgemäße Verfahren sieht vor, 90 bis 99, vorzugsweise 91 bis 97 Gew.-% Zeolith-Pulver mit 10 bis 1, vorzugsweise 9 bis 3 Gew.-% pulverförmigem Carboxymethylguar zu vermischen, dieses Gemisch unter Zusatz von Wasser in an sich bekannter Weise zu granulieren, zu trocknen und gegebenenfalls durch Siebung auf die gewünschte Korngröße einzustellen.

Sofern die Granulation nach dem Prinzip der Aufbaugranulation durchgeführt wird, werden auf je 10 Gewichtsteile Zeolith-Pulver 1 bis 3, vorzugsweise 1,2 bis 2 Gewichtsteile Wasser verwendet.

Erfolgt dagegen die Granulation nach dem Prinzip der Sprühgranulation, so werden auf je 10 Gewichtsteile Zeolith-Pulver 5 bis 13, vorzugsweise 6 bis 12 Gewichtsteile Wasser verwendet.

Zur Granulation können für beide Verfahrensprinzipien die bekannten Apparaturen verwendet werden, wobei für die Aufbaugranulation sich der Einsatz von Pflugscharmischern besonders bewährt hat, während für die Sprühgranulation die Verwendung von Düsensprühtrocknern bevorzugt wird.

Die Trocknung der Agglomerate erfolgt in an sich bekannter Weise. Die einzige begrenzende Maßnahme ist prinzipiell durch die thermische Zersetzbarkeit des Bindemittels gegeben. Es empfiehlt sich daher, Guttemperaturen von 30 bis 110" C, vorzugsweise 50 bis 105" C, einzuhalten. Die Trocknung der Agglomerate wird dabei vorteilhafter Weise bis zu einer Endfeuchte geführt, die die höchste Hydratationsstufe um maximal 12%, vorzugsweise bis zu maximal 10%, überschreitet. Unter höchster Hydratationsstufe wird dabei ein Wassergehalt verstanden, der dem gemäß der Summenformel höchstmöglichen Gehalt an Kristallwasser des eingesetzten Zeolithen mit einer Abweichung von $\pm 2$ Gew.-% einspricht.

Zur Einstellung eines Endproduktes mit definierter oberer und unterer Korngröße kann gegebenenfalls eine Siebung nachgeschaltet werden. Es ist zweckmäßig, auf eine Fraktion von z. B. 0,1 bis 0,5 $\mu$ abzusieben, da eine solche Fraktion sehr leicht mit übrigen, üblichen Waschmittelbestandteilen vermischt werden kann und bei Lagerung und Transport keine Entmischung aufweist. Über- und Unterkorn werden zurückgeführt. Anstelle einer Siebung sind auch andere klassierende Maßnahmen möglich wie Windsichten etc.

Als Zeolith werden synthetisch hergestellte Zeolithe verwendet, die als kristalline, teilkristalline oder amorphe Zeolithe eingesetzt werden können. Die Herstellung solcher synthetischer Zeolithe ist an sich bekannt und wird z. B. in der DE-B-2 412 837, US-A-4 248 847 oder DE-A-2 705 088 beschrieben. Der Einsatz kristalliner Zeolithe wird bevorzugt.

Im erfindungsgemäßen Verfahren sehr gut verwendbare Zeolithe entsprechen der allgemeinen Formel $(Me_2O)_x \cdot Al_2O_3 \cdot (SiO_2)_y \cdot (H_2O)_z$, wobei Me = Alkalimetall-Kation, $x = 0,7$ bis 1,5, $y = 0,8$ bis 6,0, $z = 3,0$ bis 10,0 bedeuten.

Bevorzugt wird ein Zeolith mit den Parametern $x = 1$, $y = 2$ und $z = 4,5$ verwendet.

Der Wassergehalt der einzusetzenden Zeolithe kann im Bereich von wasserfrei bis zur höchsten Hydratationsstufe liegen; bevorzugt werden Zeolithe der höchsten Hydratationsstufe.

Bindemittel ist Carboxymethylguar. Dieses ist ein Glaktomannan, das durch Umsetzung mit Natriummonochloracetat modifiziert ist und anionischen Charakter besitzt. Je nach Vollständigkeit der Umsetzung kann der Substitutionsgrad (das ist die Anzahl der Mole des Reaktionspartners pro Mol Anhydrohexose-Einheit) geringer oder höher sein. Bei geringen Substitutionsgraden kann noch eine nachfolgende Umsetzung z. B. mit Propylenoxid erfolgen. Aus der Gruppe der Carboxymethylguar werden jedoch diejenigen bevorzugt, die nur mit Natriummonochloracetat modifiziert sind und vorzugsweise einen höheren Substitutionsgrad, insbesondere $\geq 0,5$ aufweisen. Diese Produkte sind stark anionisch. Ein besonders bevorzugtes Produkt ist z. B. unter dem Handelsnamen Meypro-Gum®R558 erhältlich.

Die nachfolgenden Beispiele sollen die Erfindung näher erläutern, ohne den Umfang des Erfindungsgegenstandes einzuschränken.

Zur Durchführung der Versuche wurde zunächst ein homogenes, pulverförmiges Gemisch aus Zeolith und Bindemittel hergestellt. Im Falle der Granulation nach dem Prinzip der Aufbaugranulation wurde dieses Pulvergemisch im Pflugscharmischer mit Wasser zu Agglomeraten geformt. Bei Verwendung der Sprühgranulation wurde das Pulvergemisch mit der angegebenen Menge Wasser versetzt und versprüht. Die Granulation von Zeolith-Pulver mit Bindemittel-Lösung führte zu weniger befriedigenden Ergebnissen.

Die Versuchsergebnisse sind in Tabelle 1 dargestellt. Die einzelnen Spalten haben dabei folgende Bedeutung:

| | | |
|---|---|---|
| Nr | = | laufende Versuchsnummer; die Versuche Nr. 1 bis 5 sind Vergleichsbeispiele, Versuche Nr. 6 bis 18 stellen erfindungsgemäße Versuche dar. |
| MS | = | Type des eingesetzten Molekularsieb-Zeolithen; die Spezifikation der einzelnen Typen ist in Tabelle 2 angegeben. In jedem Versuch werden 100 g Zeolith eingesetzt. |
| BM | = | Bindemittel; die Spezifikation der einzelnen Bindemitteltypen ist in Tabelle 3 angegeben; die Massenangabe erfolgt in Gramm. |
| Wasser | = | Angabe der eingesetzten Wassermasse in Gramm. |
| G | = | Angabe des Granulationsverfahrens; dabei bedeutet M die Granulation im Pflugscharmischer, S die Granulation im Düsensprühtrockner. |

## Abrieb

Angabe der Abriebfestigkeit; je 100 g Agglomerat der Korngröße 0,2 bis 0,5 mm wurde 60 Minuten lang in einer Porzellan-Kugelmühle (Leervolumen 3 l) mit 60 U/min bewegt und anschließend über ein 0,2-mm-Sieb abgesiebt. Als Abrieb wird der Anteil in Gramm mit einer Teilchengröße unter 0,2 mm angegeben.

## Hydrat

Angabe des Wassergehaltes in Gew.-% der bei 50 bis 105° C Guttemperatur getrockneten Agglomerate, bezogen auf 100 g Zeolith; die Messung erfolgte durch Trocknung im Trockenschrank bei 110° C.

3

**0 072 971**

Dispergierung

Die Prüfung auf Dispergierbarkeit erfolgte in einem Linitest-Gerät unter folgenden Bedingungen:

15 Minuten, 60°C
625 mg IEC Testwaschpulver
150 mg Natriumperborat
250 mg Agglomerat gemäß Tabelle 1
250 ml Wasser

Die Ermittlung der Korngrößenverteilung erfolgte mit einem Coulter-Counter; für die Ermittlung der Korngrößenverteilung der eingesetzten Zeolithe (Tabelle 2) wurden frisch synthetisierte Ansätze unter ansonsten gleichen Bedingungen verwendet.

Als Kennwert für die Dispergierbarkeit wurden die d50- und d10-Werte angegeben. Der d10-Wert gibt eine Grenz-Teilchengröße in $\mu$ an: 10% der Teilchen (Mengen-%) sind größer als diese Grenz-Teilchengröße.

Außerdem wird noch in der Spalte »10 $\mu$« derjenige Anteil in Mengen-% angegeben, der eine Teilchengröße von mehr als 10 $\mu$ aufweist.

Aus den Versuchsergebnissen ist sehr gut zu erkennen, daß die nach dem erfindungsgemäßen Verfahren hergestellten Agglomerate sowohl abriebfest sind als auch bei Dispergierung überraschenderweise eine bessere Verteilung aufweisen als Agglomerate, die unter Verwendung anderer Bindemittel hergestellt wurden.

Tabelle 1

Versuche 1 bis 18

| Nr. | MS | BM Art | Masse | Wasser | G | Abrieb | Hydrat | Dispergierung d50 | d10 | 10 $\mu$ |
|-----|-----|-----|-------|--------|---|--------|--------|------|------|------|
| 1 | A | S1 | 5 | 13 | M | 25,5 | 25,1 | 5,2 | 11,1 | 11,0 |
| 2 | A | C1 | 5 | 15 | M | 27,1 | 23,2 | 5,0 | 10,2 | 14,5 |
| 3 | A | G1 | 5 | 15 | M | 14,8 | 22,2 | 6,1 | 10,2 | 11,7 |
| 4 | A | G2 | 5 | 16 | M | 18,2 | 22,3 | 4,9 | 11,4 | 13,2 |
| 5 | X | Z1 | 5 | 12 | M | 24,0 | 27,0 | 4,1 | 12,8 | 19,5 |
| 6 | A | G3 | 3 | 15 | M | 15,6 | 24,4 | 3,1 | 7,0 | 4,3 |
| 7 | A | G3 | 5 | 15 | M | 10,3 | 23,9 | 2,7 | 5,5 | 3,1 |
| 8 | A | G3 | 7,5 | 15 | M | 10,2 | 24,1 | 2,9 | 6,2 | 3,5 |
| 9 | A | G3 | 10 | 15 | M | 10,9 | 24,4 | 2,9 | 6,6 | 3,9 |
| 10 | A | G3 | 5 | 12 | M | 9,8 | 24,1 | 3,0 | 6,9 | 4,4 |
| 11 | A | G3 | 9 | 14 | M | 10,2 | 23,7 | 3,0 | 5,4 | 1,0 |
| 12 | A | G3 | 5 | 60 | S | 10,4 | 24,1 | 2,7 | 5,6 | 3,0 |
| 13 | A | G3 | 5 | 120 | S | 10,1 | 24,4 | 2,7 | 5,7 | 3,3 |
| 14 | X | G3 | 5 | 13 | M | 10,8 | 26,2 | 2,8 | 5,3 | 3,4 |
| 15 | Y | G3 | 5 | 14 | M | 11,0 | 27,0 | 2,6 | 5,5 | 3,9 |
| 16 | N | G3 | 5 | 20 | M | 11,4 | 23,8 | 2,4 | 4,6 | 3,2 |
| 17 | A | G4 | 5 | 15 | M | 12,6 | 24,9 | 3,1 | 6,3 | 4,9 |
| 18 | A | G5 | 5 | 16 | M | 17,4 | 25,0 | 4,4 | 9,1 | 9,0 |

Tabelle 2
Zeolith-Typen

| Typ | Zusammensetzung | Hydrat | Dispergierung | | |
|-----|-----------------|--------|------|------|------|
|     |                 |        | d50  | d10  | 10 μ |
| A   | $Na_2O \cdot Al_2O_3 \cdot 2\ SiO_2 \cdot 4,5\ H_2O$ | 22,3 | 2,7 | 5,5 | 3,3 |
| X   | $Na_2O \cdot Al_2O_3 \cdot 2,5\ SiO_2 \cdot 6\ H_2O$ | 25,6 | 2,8 | 5,3 | 3,8 |
| Y   | $Na_2O \cdot Al_2O_3 \cdot 4,8\ SiO_2 \cdot 8,9\ H_2O$ | 26,2 | 2,5 | 5,4 | 3,7 |
| N   | $Na_2O \cdot Al_2O_3 \cdot 2\ SiO_2 \cdot 4,7\ H_2O$ | 23,0 | 2,3 | 4,5 | 4,3 |

Die Typen A, X und Y sind kristallin, Typ N ist amorph.

Tabelle 3
Bindemittel-Typen

| Typ | Art | Handelsprodukt |
|-----|-----|----------------|
| S1  | Kartoffelstärke | |
| C1  | Carboxymethylcellulose | Tylose® CB 4000 |
| G1  | kationaktiver Guar | Jaguar® CP-13 |
| G2  | nativer Guar | Meypro®-Guar 200/50 |
| G3  | Carboxymethylguar (Substitutionsgrad 1,8) | Meypro-Gum® R558 |
| G4  | Carboxymethylguar (Substitutionsgrad 1,5) | Meypro-Gum® R600 |
| G5  | Carboxymethyl/hydroxyalkylguar (Substitutionsgrad bez. Carboxymethylierung 0,06) | Jaguar® CMHP |

**Patentansprüche**

1. Verfahren zur Herstellung von in wäßrigem Medium leicht zerfallenden Agglomeraten aus Zeolith und einem organischen, wasserlöslichen Bindemittel, dadurch gekennzeichnet, daß man ein Gemisch aus 90 bis 99, vorzugsweise 91 bis 97 Gew.-% Zeolith-Pulver mit 10 bis 1, vorzugsweise 9 bis 3 Gew.-% pulverförmigem Carboxymethylguar herstellt und dieses Gemisch unter Zusatz von Wasser in an sich bekannter Weise granuliert, trocknet und gegebenenfalls durch Siebung auf die gewünschte Korngröße einstellt.

2. Verfahren nach Anspruch 1, dadurch gekennzeichnet, daß man bei der Granulation nach dem Prinzip der Aufbaugranulation auf je 10 Gewichtsteile Zeolith-Pulver 1 bis 3, vorzugsweise 1,2 bis 2 Gewichtsteile Wasser einsetzt.

3. Verfahren nach Anspruch 1, dadurch gekennzeichnet, daß man bei der Granulation nach dem Prinzip der Sprühgranulation auf je 10 Gewichtsteile Zeolith-Pulver 5 bis 13, vorzugsweise 6 bis 12 Gewichtsteile Wasser einsetzt.

4. Verfahren nach einem der Ansprüche 1 bis 3, dadurch gekennzeichnet, daß man das feuchte Granulat bei einer Granulattemperatur von 30 bis 110° C, vorzugsweise 50 bis 105° C, trocknet.

5. Verfahren nach einem der Ansprüche 1 bis 4, dadurch gekennzeichnet, daß man bis zu einer Endfeuchte trocknet, die um max. 12 Gew.-%, vorzugsweise bis zu max. 10%, die höchste Hydratationsstufe des Zeolithen überschreitet.

6. Verfahren nach einem der Ansprüche 1 bis 5, dadurch gekennzeichnet, daß man kristallinen Zeolith verwendet.

7. Verfahren nach einem der Ansprüche 1 bis 6, dadurch gekennzeichnet, daß man einen synthetischen Zeolith der allgemeinen Formel $(Me_2O)_x \cdot Al_2O_3 \cdot (SiO_2)_y \cdot (H_2O)_z$ verwendet, wobei Me =

Alkalimetall-Kation, x = 0,7 bis 1,5, y = 0,8 bis 6,0, z = 3,0 bis 10,0, bedeuten.

8. Verfahren nach einem der Ansprüche 1 bis 7, dadurch gekennzeichnet, daß man einen Zeolith verwendet, dessen Wassergehalt der höchsten Hydratationsstufe entspricht.

9. Verfahren nach einem der Ansprüche 1 bis 8, dadurch gekennzeichnet, daß man einen synthetischen Zeolith der allgemeinen Formel $Me_2O \cdot Al_2O_3 \cdot 2\ SiO_2 \cdot 4,5\ H_2O$ verwendet.

10. Verfahren nach einem der Ansprüche 1 bis 9, dadurch gekennzeichnet, daß man als Bindemittel stark anionischen Carboxymethylguar verwendet.

11. In wäßrigem Medium leicht zerfallende Agglomerate mit einer Korngröße im Bereich von 0,1 bis 0,5 mm, bestehend aus 91 bis 99 Gew.-% Zeolith-Pulver und 9 bis 1% Carboxymethylguar.

## Claims

1. Process for the production of agglomerates, which readily disintegrate in aqueous medium, of zeolite and an organic, water-soluble binding agent, characterised in that a mixture of 90 to 99, preferably 91 to 97% by weight zeolite powder with 10 to 1, preferably 9 to 3% by weight pulverulent carboxymethylguar is produced, and this mixture is granulated with the addition of water in a manner known per se, dried and, if required, adjusted to the desired grain size by screening.

2. Process according to Claim 1, characterised in that when the granulation is effected according to the principle of build-up granulation, 1 to 3, preferably 1.2 to 2 parts by weight water are used for every 10 parts by weights zeolite powder.

3. Process according to Claim 1, characterised in that when the granulation is effected according to the principle of spray granulation, 5 to 13, preferably 6 to 12 parts by weight water are used for every 10 parts by weight zeolite powder.

4. Process according to one of Claims 1 to 3, characterised in that the damp granulate is dried at a granulate temperature of 30 to 110° C, preferably 50 to 105° C.

5. Process according to one of Claims 1 to 4, characterised in that drying takes place up to a final moistness which exceeds the highest hydration point of the zeolite by a maximum of 12% by weight, preferably up to a maximum of 10%.

6. Process according to one of Claims 1 to 5, characterised in that crystalline zeolite is used.

7. Process according to one of Claims 1 to 6, characterised in that a synthetic zeolite is used, of the general formula $(Me_2O)_x \cdot Al_2O_3 \cdot (SiO_2)_y \cdot (H_2O)_z$, in which Me = alkali metal cation, x = 0.7 to 1.5, y = 0.8 to 6.0, z = 3.0 to 10.0.

8. Process according to one of Claims 1 to 7, characterised in that a zeolite is used, the water content of which corresponds to the highest hydration point.

9. Process according to one of Claims 1 to 8, characterised in that a synthetic zeolite is used of the general formula $Me_2O \cdot Al_2O_3 \cdot 2\ SiO_2 \cdot 4.5\ H_2O$.

10. Process according to one of Claims 1 to 9, characterised in that strongly anionic carboxymethylguar is used as binding agent.

11. Agglomerates which readily desintegrate in aqueous medium, with a grain size in the range of from 0.1 to 0.5 mm consisting of 91 to 99% by weight zeolite powder and 9 to 1% carboxymethylguar.

## Revendications

1. Procédé pour la production d'agglomérats obtenus à partir de zéolithe et d'un liant organique hydrosoluble se désagrégeant facilement en milieu aqueux, caractérisé en ce que l'on prépare un mélange de 90 à 99, de préférence de 91 à 97% en poids de poudre de zéolithe avec 10 à 1, de préférence 9 à 3% en poids de carboxyméthylguar pulvérulent, granule ce mélange de façon connue en soi par addition d'eau, le sèche et l'amène, éventuellement par tamisage, à la dimension de grain désirée.

2. Procédé selon la revendication 1, caractérisé en ce que, lors de la granulation selon le principe de la granulation par accroissement de la taille, on met en oeuvre pour 10 parties en poids de poudre de zéolithe 1 à 3, de préférence 1,2 à 2 parties en poids d'eau.

3. Procédé selon la revendication 1, caractérisé en ce qu'on met en oeuvre, lors de la granulation selon le principe de la granulation par pulvérisation, 5 à 13, de préférence 6 à 12 parties en poids d'eau pour 10 parties en poids de poudre de zéolithe.

4. Procédé selon l'une des revendications 1 à 3, caractérisé en ce que l'on sèche les granules humides à une température des granules de 30 à 110° C, de préférence de 50 à 105" C.

5. Procédé selon l'une des revendications 1 à 4, caractérisé en ce que l'on sèche jusqu'à une humidité finale qui dépasse au maximum de 12% en poids, de préférence jusqu'à 10% au maximum le degré d'hydratation le plus élevé de la zéolithe.

6. Procédé selon l'une des revendications 1 à 5, caractérisé en ce qu'on utilise une zéolithe cristalline.

7. Procédé selon l'une des revendications 1 à 6, caractérisé en ce qu'on utilise une zéolithe synthéti-

6

que de formule générale $(Me_2O)_x \cdot Al_2O_3 \cdot (SiO_2)_y \cdot (H_2O)_z$ où Me représente un cation de métal alcalin, $x = 0,7$ à $1,5$, $y = 0,8$ à $6,0$, $z = 3,0$ à $10,0$.

8. Procédé selon l'une des revendications 1 à 7, caractérisé en ce qu'on utilise une zéolithe dont la teneur en eau correspond au degré d'hydratation le plus élevé.

9. Procédé selon l'une des revendications 1 à 8, caractérisé en ce qu'on utilise une zéolithe synthétique répondant à la formule générale $Me_2O \cdot Al_2O_3 \cdot 2\,SiO_2 \cdot 4,5\,H_2O$.

10. Procédé selon l'une des revendications 1 à 9, caractérisé en ce qu'on utilise comme liant un carboxyméthylguar fortement anionique.

11. Agglomérats se désagrégeant facilement en milieu aqueux, ayant une dimension de grain comprise entre 0,1 et 0,5 mm, et composés de 91 à 99% en poids de poudre de zéolithe et de 9 à 1% en poids de carboxyméthylguar.